# EUROPÄISCHE PATENTSCHRIFT

(11) **EP 1 425 497 B1**
(45) Veröffentlichungstag und Bekanntmachung des Hinweises auf die Patenterteilung: **03.01.2007**
(21) Anmeldenummer: 02762221.6
(22) Anmeldetag: 10.07.2002
(51) Int. Cl.: F01N 3/029, F01N 3/08, F01N 3/20, B01D 53/32, B01D 53/94, F01N 3/035

(54) **VORRICHTUNG UND VERFAHREN ZUR ABGASNACHBEHANDLUNG**
DEVICE AND METHOD FOR EXHAUST GAS AFTER-TREATMENT
DISPOSITIF ET PROCEDE DE POST-TRAITEMENT DE GAZ D'ECHAPPEMENT

(30) Priorität: 31.08.2001 DE 10142800
(43) Veröffentlichungstag der Anmeldung: 09.06.2004
(73) Patentinhaber: ROBERT BOSCH GMBH, 70442 Stuttgart (DE)
(72) Erfinder: PFENDTNER, Reinhard, 74321 Bietigheim-Bissingen (DE); HARTHERZ, Patrik, 71640 Ludwigsburg (DE); ORLANDINI, Igor, 70329 Stuttgart (DE)
(86) Internationale Anmeldenummer: PCT/DE2002/002572
(87) Internationale Veröffentlichungsnummer: WO 2003/027452

(56) Entgegenhaltungen:
- EP-A- 1 020 620
- DE-A- 19 750 178

## Beschreibung

### Stand der Technik

Die Erfindung geht aus von einer Vorrichtung beziehungsweise einem Verfahren zur Nachbehandlung des Abgases einer Brennkraftmaschine nach der Gattung der unabhängigen Ansprüche. Es ist schon eine Vorrichtung zur Abgasnachbehandlung aus der DE 199 04 068 bekannt, bei der von einem Ozonreaktor produziertes Ozon in den Abgastrakt einer Brennkraftmaschine eingeführt wird, bei der jedoch bei niedrigen Temperaturen eine Verbrennung von Dieselruss nicht sichergestellt ist, weil der dem Partikelfilter vorgeschaltete Oxidationskatalysator bei niedrigen Temperaturen, insbesondere unterhalb einer Abgastemperatur von 250 Grad Celsius, keine Stickoxide oxidiert und damit das vom Ozonreaktor gelieferte Ozon von den Stickoxiden wegreagiert wird, so dass es keine Wirkung als Oxidans im Partikelfilter entfalten kann.

### Vorteile der Erfindung

Die erfindungsgemäße Vorrichtung beziehungsweise das erfindungsgemäße Verfahren haben demgegenüber den Vorteil, auch bei niedrigen Abgastemperaturen, insbesondere bei Abgastemperaturen unterhalb von 250 Grad Celsius, also unter Kaltstartbedingungen, eine Russverbrennung sicherzustellen, aufgrund einer Aktivität des Oxidationsreaktors unabhängig vom Betriebszustand der Brennkraftmaschine, insbesondere auch bei einem Start oder bei in der Aufwärmephase der Brennkraftmaschine herrschenden Abgastemperaturen. Darüber hinaus gewährleistet die Bereitstellung zweier separater Pfade zur Oxidation von Stickoxiden beziehungsweise zur Bereitstellung von Ozon eine energetisch günstige Vorgehensweise, weil zur Oxidation der Stickoxide kleinere Energiemengen ausreichen als sie zur Ozonerzeugung notwendig sind und durch die Separation jeder Pfad für sich energetisch optimiert werden kann.

Insbesondere vorteilhaft ist es, als Abgasreinigungseinheit einen Partikelfilter nachzuschalten, dessen Regeneration durch die erfindungsgemässe Kombination eines Ozonreaktors mit einem Plasmareaktor in jedem Betriebszustand des Motors sichergestellt wird.

Weitere Vorteile ergeben sich durch die weiteren in den abhängigen Ansprüchen und in der Beschreibung genannten Merkmale.

### Zeichnung

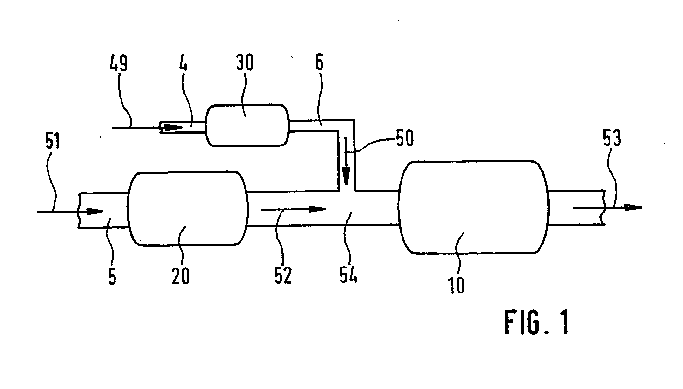

Ausführungsbeispiele der Erfindung sind in der Zeichnung dargestellt und in der nachfolgenden Beschreibung näher erläutert. Die einzige Figur 1 illustriert eine Vorrichtung beziehungsweise ein Verfahren zur Abgasnachbehandlung unter Verwendung zweier separater Pfade zur Oxidation von Stickoxiden beziehungsweise zur Erzeugung von Ozon.

### Beschreibung der Ausführungsbeispiele

In Figur 1 ist ein Ozonreaktor 30 dargestellt, der eingangsseitig mit einer Luftzufuhrleitung 4 zur Zufuhr von Luft 49 und ausgangsseitig mit einer Ozonleitung 6 zur Einspeisung ozonangereicherter Luft 50 in eine Abgasleitung 5 an einer Abgabestelle 54 verbunden ist. Die Abgasleitung 5 ist mit einer nicht dargestellten Brennkraftmaschine, insbesondere Dieselbrennkraftmaschine, verbindbar zum Abtransport des Abgases 51. Vor der Abgabestelle 54 ist in der Abgasleitung 5 ein Plasmareaktor 20 angeordnet. Im Plasmareaktor 20 aufbereitetes Abgas 52 vermischt sich an der Abgabestelle 54 mit der ozonangereicherten Luft 50 und durchströmt die als Partikelfilter ausgeführte Abgasnachbehandlungseinheit 10. Hinter der Abgasnachbehandlungseinheit verlässt gereinigtes Abgas 53 die Vorrichtung. Sowohl der Ozonreaktor 30 als auch der Plasmareaktor 20 sind Reaktoren zur Erzeugung eines nichtthermischen Plasmas, das heisst eines Gases mit relativ kalten Ionen und heissen freien Elektronen, das heisst Elektronen mit hoher Geschwindigkeit, so dass insbesondere Sauerstoffradikale entstehen und Sauerstoffmoleküle sowie Stickstoffmonoxid zu Ozon beziehungweise Stickstoffdioxid oxidiert werden können. Das Plasma wird hierbei in an sich bekannter Weise in einer stillen elektrischen Entladung (Corona-Entladung oder dielektrisch behinderte Entladung) zwischen zwei Elektroden erzeugt, durch die das zu behandelnde Gas hindurchströmt und zwischen denen ein elektrisches Hochspannungswechselfeld angelegt werden kann. Dabei ist mindestens eine Elektrode mit einem Dielektrikum belegt und/oder die Elektrodengeometrie so gewählt, dass Feldinhomogenitäten resultieren, die eine durchgängige und andauernde Funkenentladung unterbinden, so dass sich die schweren Teilchen, also die Ionen, nicht erwärmen können und sich lediglich die erwünschten stillen Entladungen zur Beschleunigung der Elektronen einstellen.

Aufgrund niedriger thermischer Stabilität von Ozon wird dieser reaktive Stoff in einem separaten Luftnebenstrang (4, 30, 6), dessen Temperatur ungefähr der Aussentemperatur des die Brennkraftmaschine enthaltenden Kraftfahrzeugs entspricht, durch Oxidation des Luftsauerstoffs erzeugt. Um Ozonverluste durch die Oxidation von im Dieselabgas 51 enthaltener Stickoxide und enthaltener Kohlenwasserstoffe zu vermeiden, ist der Plasmareaktor 20 zwischen Brennkraftmaschine und Abgabestelle 54 vorgesehen. Er oxidiert die im Abgas enthaltenen Kohlenwasserstoffe zumindest partiell, ebenso wird Stickstoffmonoxid zu Stickstoffdioxid oxidiert. Diese Oxidationsprozesse sowohl im Ozonreaktor 30 als auch im Plasmareaktor 20 werden durch die stillen elektrischen Entladungen, die sich in Zeiträumen von zirka 50 Nanosekunden Dauer entlang einzelner fadenförmiger Bereiche zwischen den Elektroden erstrecken, herbeigeführt. Dabei entsteht auch UV-Licht, das die Oxidationsvorgänge zusätzlich unterstützt. Die in den Plasmareaktor einzuspeisende elektrische Energie ist geringer als die für den Ozonreaktor 30 erforderliche, insbesondere reichen also beim Plasmareaktor 20 kleinere Feld- und damit Spannungsamplituden, um die pro Zeiteinheit anfallenden Stickstoffmonoxide zu oxidieren. Durch die Umwandlung der Stickoxide in Stickstoffdioxid vor der Ozonzugabe bleibt das erzeugte Ozon im Abgasstrang bis zum Dieselpartikelfilter in vollem Umfang erhalten. Damit kann Ruß im Dieselpartikelfilter mit Hilfe des Ozons insbesondere in kontinuierlicher Betriebsweise zu Kohlendioxid oxidiert werden.

In alternativen Ausführungsformen können der Ozon- und/oder der Plasmareaktor auch Elektrodenanordnungen enthalten, bei denen beide Elektroden mit einem Dielektrikum belegt sind (zweiseitig statt einseitig dielektrisch behinderte elektrische Entladung). Alternativ kann die Behinderung der elektrischen Entladung zur Erzielung stiller Entladungen auch durch geeignete Elektrodengeometrien erreicht werden, die Feldinhomogenitäten verursachen und damit durchgängige Funkenentladungen verhindern. Dies gewährleistet beispielsweise eine zylindrische Elektrodenanordnung, bei der die eine Elektrode als Stab konzentrisch in einem vom Gas durchströmten Zylinder, der die zweite Elektrode bildet, angeordnet ist. Alternativ kann auch statt einer elektrischen Wechselspannung im Kilohertz-Bereich eine gepulste Gleichspannung angelegt werden; hierbei muss dann allerdings ein Puls-Pause-Verhältnis vorgesehen werden, dessen minimaler Wert durch die Strömungsgeschwindigkeit des Abgases und dessen maximaler Wert durch die benötigte Zeitdauer vorgegeben wird, in der sich die auf einem verwendeten Dielektrikum befindlichen Elektronen wieder gleichmässig verteilen können. In einer weiteren alternativen Ausführungsform kann als Ozon- und/oder als Plasmareaktor auch eine Anordnung vorgesehen sein, die als wesentliches Element zur Anregung von Oxidationsvorgängen eine UV-Lampe aufweist.

## Patentansprüche

1. Vorrichtung zur Nachbehandlung des Abgases einer Brennkraftmaschine, mit einem Ozonreaktor zur Abgabe von Ozon an das Abgas an einer Abgabestelle, **dadurch gekennzeichnet, dass** vor der Abgabestelle (54) ein Oxidationsreaktor (20) zur zumindest partiellen Oxidation von Stickoxiden und/oder Kohlenwasserstoffen angeordnet ist, wobei der Oxidationsreaktor ein Plasmareaktor (20) ist.

2. Vorrichtung nach Anspruch 1, **dadurch gekennzeichnet, dass** der Plasmareaktor ein Reaktor zur Erzeugung eines nichtthermischen Plasmas ist.

3. Vorrichtung nach Anspruch 2, **dadurch gekennzeichnet, dass** das nichtthermische Plasma mittels einer elektrischen Entladung und/oder einer UV-Lampe erzeugt wird.

4. Vorrichtung nach Anspruch 3, **dadurch gekennzeichnet, dass** die elektrische Entladung eine stille elektrische Entladung ist.

5. Vorrichtung nach Anspruch 4, **dadurch gekennzeichnet, dass** die stille elektrische Entladung eine dielektrisch behinderte elektrische Entladung ist.

6. Vorrichtung nach einem der vorhergehenden Ansprüche, **dadurch gekennzeichnet, dass** der Ozonreaktor (30) durch einen weiteren Plasmareaktor gebildet ist.

7. Vorrichtung nach Anspruch 6, **dadurch gekennzeichnet, dass** der weitere Plasmareaktor ein Reaktor zur Erzeugung eines nichtthermischen Plasmas ist.

8. Vorrichtung nach einem der vorhergehenden Ansprüche, **dadurch gekennzeichnet**, das in Strömungsrichtung des Abgases hinter der Abgabestelle eine Abgasreinigungseinheit angeordnet ist.

9. Vorrichtung nach Anspruch 8, **dadurch gekennzeichnet, dass** die Abgasreinigungseinheit ein Partikelfilter (10) ist.

10. Vorrichtung nach Anspruch 9, **dadurch gekennzeichnet, dass** das Partikelfilter katalytisch beschichtet ist.

11. Verfahren zur Nachbehandlung des Abgases einer Brennkraftmaschine, bei dem dem zu reinigenden Abgas Ozon zugesetzt wird, **dadurch gekennzeichnet, dass** vor der Zusetzung des Ozons im Abgas enthaltene Stickoxide und/oder unverbrannte Kohlenwasserstoffe nachmotorisch zumindest teilweise oxidiert werden, wobei die Oxidation unabhängig vom Betriebszustand der Brennkraftmaschine, insbesondere auch bei einem Start oder in der Aufwärmphase der Brennkraftmaschine herrschenden Abgastemperaturen, erfolgt.

## Claims

1. Apparatus for the aftertreatment of the exhaust gas from an internal combustion engine, having an ozone reactor for releasing ozone to the exhaust gas at a release point, **characterized in that** an oxidation reactor (20) for the at least partial oxidation of nitrogen oxides and/or hydrocarbons is arranged upstream of the release point (54), the oxidation reactor being a plasma reactor (20).

2. Apparatus according to Claim 1, **characterized in that** the plasma reactor is a reactor for generating a non-thermal plasma.

3. Apparatus according to Claim 2, **characterized in that** the non-thermal plasma is generated by means of an electric discharge and/or a UV lamp.

4. Apparatus according to Claim 3, **characterized in that** the electric discharge is a silent electric discharge.

5. Apparatus according to Claim 4, **characterized in that** the silent electric discharge is a dielectric barrier electric discharge.

6. Apparatus according to one of the preceding claims, **characterized in that** the ozone reactor (30) is formed by a further plasma reactor.

7. Apparatus according to Claim 6, **characterized in that** the further plasma reactor is a reactor for generating a non-thermal plasma.

8. Apparatus according to one of the preceding claims, **characterized in that** an exhaust-gas purification unit is arranged downstream of the release point, as seen in the direction of flow of the exhaust gas.

9. Apparatus according to Claim 8, **characterized in that** the exhaust-gas purification unit is a particulate filter (10).

10. Apparatus according to Claim 9, **characterized in that** the particulate filter is catalytically coated.

11. Process for the aftertreatment of the exhaust gas from an internal combustion engine, in which ozone is added to the exhaust gas that is to be purified, **characterized in that** prior to the addition of the ozone, unburnt hydrocarbons and/or nitrogen oxides contained in the exhaust gas are at least partially oxidized downstream of the engine, the oxidation taking place independently of the operating state of the internal combustion engine, in particular even at exhaust-gas temperatures during a start-up or in the warm-up phase of the internal combustion engine.

## Revendications

1. Dispositif de post-traitement des gaz d'échappement d'un moteur à combustion interne, avec un réacteur à ozone pour ajouter de l'ozone aux gaz d'échappement en un point d'addition,
**caractérisé en ce qu'**
un réacteur d'oxydation (20) est disposé avant le point d'addition (54) pour l'oxydation au moins partielle d'oxydes d'azote et/ou d'hydrocarbures, le réacteur d'oxydation étant un réacteur à plasma (20).

2. Dispositif selon la revendication 1,
**caractérisé en ce que**
le réacteur à plasma produit un plasma non thermique.

3. Dispositif selon la revendication 2,
**caractérisé en ce que**
le plasma non thermique est produit au moyen d'une décharge électrique et/ ou d'une lampe UV.

4. Dispositif selon la revendication 3,
**caractérisé en ce que**
la décharge électrique est une décharge électrique silencieuse.

5. Dispositif selon la revendication 4,
**caractérisé en ce que**
la décharge électrique silencieuse est une décharge entravée de façon diélectrique.

6. Dispositif selon l'une des revendications précédentes,
**caractérisé en ce que**
le réacteur à ozone (30) est formé par un autre réacteur à plasma.

7. Dispositif selon la revendication 6,
**caractérisé en ce que**
l'autre réacteur à plasma produit un plasma non thermique.

8. Dispositif selon l'une des revendications précédentes,
**caractérisé en ce qu'**
une unité d'épuration des gaz d'échappement est disposée après le point d'addition dans le sens d'écoulement des gaz d'échappement.

9. Dispositif selon la revendication 8,
**caractérisé en ce que**
l'unité d'épuration des gaz d'échappement est un filtre à particules (10).

10. Dispositif selon la revendication 9,
**caractérisé en ce que**
le filtre à particules porte un revêtement catalytique.

11. Procédé de post-traitement des gaz d'échappement d'un moteur à combustion interne, dans lequel on ajoute de l'ozone aux gaz d'échappement à épurer,
**caractérisé en ce qu'**
avant l'addition d'ozone, on oxyde au moins partiellement les oxydes d'azote et/ou les hydrocarbures imbrûlés contenus dans les gaz d'échappement après le moteur, l'oxydation étant effectuée indépendamment de l'état de fonctionnement du moteur à combustion interne, en particulier aussi lors d'un démarrage ou aux températures des gaz d'échappement régnant dans la phase d'échauffement du moteur à combustion interne.
